Europäisches Patentamt

**European Patent Office**

Office européen des brevets

(11) Publication number: **0 102 783**

**A2**

(12) **EUROPEAN PATENT APPLICATION**

(21) Application number: **83304681.6**

(22) Date of filing: **12.08.83**

(51) Int. Cl.³: **B 25 J 17/00**

(30) Priority: **30.08.82 US 412668**

(43) Date of publication of application:
**14.03.84 Bulletin 84/11**

(84) Designated Contracting States:-
**CH DE FR GB IT LI NL SE**

(71) Applicant: **BORG-WARNER CORPORATION**
**200 South Michigan Avenue**
**Chicago Illinois 60604(US)**

(72) Inventor: **Hansen, James Andrew**
**1571 Van Buren**
**Des Plaines Illinois 60018(US)**

(74) Representative: **Williams, Trevor John et al,**
**J.A. KEMP & CO. 14 South Square Gray's Inn**
**London WC1R 5EU(GB)**

(54) **Controllable joint.**

(57) A controllable joint (10) has first (12) and second (40) members with first (A) and second (C) axes respectively. The first member supports at least three coupling members (30), each movable relative to the first axis. Each coupling member is received by the second member for movement relative to the second axis. Means (16) are provided for selectively controlling the coupling memberrs, thereby determining the position of the second member relative to the first member.

FIG-1

## CONTROLLABLE JOINT

### Description

This invention relates generally to a controllable joint. More particularly, it relates to a controllable joint which is suitable for use in automated equipment or a robot.

Over the years there has been increasing interest in automation and robotics. Robots typically employ elbow joints, wrist joints or the like for the proper positioning of various elements. These joints generally require a plurality of intersecting hinges arranged to pivot or rotate in three planes. Such joints typically are complex and unduly large.

There is a need in the art for a controllable joint having controlled movement for the proper angular positioning of its associated elements. It is also desirable for such a joint to have controlled axial positioning. The joint should be neither complex nor unduly large.

This invention is directed to such a controllable joint. The invention utilizes certain concepts applicable to a constant velocity universal joint, as disclosed in U.S. patent 4,026,123 issued May 31, 1977 and U.S. patent 4,036,032 issued July 19, 1977. These patents are of common assignee herewith, and are included herein by reference.

The controllable joint of this invention includes a drive member supporting a plurality of pins which are inclined toward the axis of the drive member. A plurality of coupling members are movable on the pins in a controlled manner. A driven member defines a plurality of grooves which are inclined toward the axis of the driven member. The grooves receive the coupling members. The angular and axial position of the driven member relative to the drive member is determined by the positions of the coupling members, which are selectively movable in a controlled manner.

Individually controlled movement of the coupling members distinguishes the controllable joint of this invention from the universal joints disclosed in the aforementioned patents. There the coupling members respond to relative movement between rotating drive and driven members so as to accommodate that movement while maintaining rotation at a constant velocity. The invention herein is primarily concerned with the relative position or orientation of the drive and driven members. The invention provides for controlling movement of the coupling members so as to determine the position of the driven member relative to the drive member.

The objects and advantages of this invention will become apparent to those skilled in the art upon careful consideration of the specification herein, including the drawings, wherein:

FIGURE 1 is a side view, partially in section, of the controllable joint of this invention;

FIGURE 2 is a sectional view of one control assembly for the joint;

FIGURE 3 is a sectional view of a modified control assembl. for the joint;

FIGURE 4 is a view similar to FIGURE 1, partially in section, of a modified form of the joint.

FIGURE 5 is an end view of the drive portion of the joint;

FIGURE 6 is a side view, partially in section, taken along the line 5-5 of FIGURE 4;

FIGURE 7 is an end view of the driven portion of the joint;

FIGURE 8 is a sectional view taken along the line 7-7 of FIGURE 6;

FIGURE 9 is a sectional view taken along the line 8-8 of FIGURE 6,

While this invention is susceptible of embodiment in many different forms, the preferred embodiment is shown in the drawings and described in detail. It should be understood that the present disclosure is considered to be an exemplification of the principles of the invention, and is not intended to limit the invention to this embodiment.

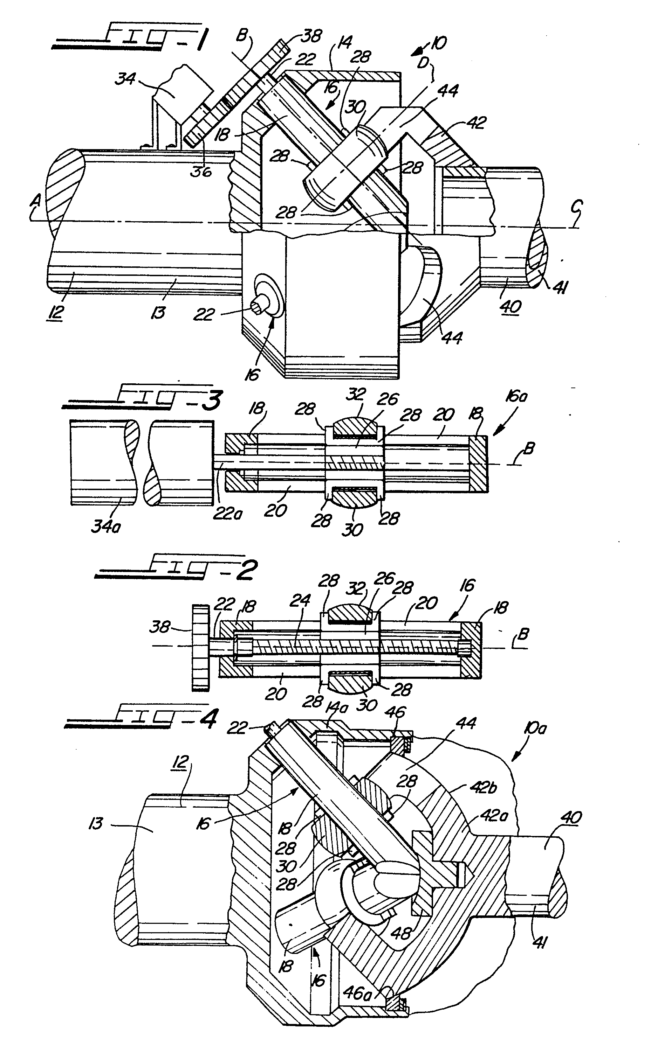

Turning now to the drawings in greater detail, in FIGURE 1 reference numeral 10 designates generally the controllable joint of this invention. Joint 10 includes a first, drive member 12 having a shaft portion 13 extending along an axis A. Member 12 includes a drum 14 at one end thereof. Drum 14 supports at least three control assemblies 16, each having an axis B. In the preferred form of the invention, control assemblies 16 are oriented such that their axes B converge inwardly and intersect at a point on axis A. Control assemblies 16 are secured at their outer ends to drum 14, and are welded or otherwise suitably secured together at their inner ends.

Each control assembly 16 includes a hollow pin 18, as shown in FIG. 2, defining slots 20 parallel to axis B. A shaft 22 is journalled for rotation on axis B. Within pin 18, shaft 22 includes a threaded portion 24. A nut 26 is threaded on portion 24 of shaft 22. Nut 26 includes a plurality of guides 28 extending outwardly through slots 20. A coupling member 30, which may be a ball or the like, is supported on pin 18 between guides 28 for axial sliding movement along and rotation on axis B. In the preferred form of the invention, ball 30 defines a surface 32 of partial spherical configuration. The term "ball unit", as used in the appended claims, includes a piece such as 30, only a portion of which has a ball-like surface.

Each control assembly 16 is in effect a lead screw mechanism.   Rotation of shaft 22 causes nut 26 to move axially along axis B toward and away from axis A. Ball 30 moves with nut 26.

A plurality of stepper motors 34 or the like, one of which is shown in FIGURE 1, are supported by member 12.   Each stepper motor 34 is arranged to rotate an associated shaft 22, if desired through suitable gears 36 and 38.   Control assemblies 16 are thus individually actuated, and balls 30 are individually controlled.

A second, driven member 40 has a shaft portion 41 extending along an axis C.   Member 40 includes a flange 42 secured to one end thereof.   Flange 42 defines a plurality of grooves 44, each having an axis D.   In the preferred form of the invention, grooves 44 have a partial cylindrical configuration, and are oriented such that their axes D converge inwardly and intersect at a point on axis C.

In the preferred form of the invention, the angles formed by axes A and B are equal to the angles formed by axes C and D.   However, it should be noted that design considerations may suggest otherwise.

Each ball 30 is received in an associated groove 44.   A minimum of three balls 30 is required to define the homokinetic plane, which always bisects the angle between axes A and C.   Control assemblies 16 are selectively operable to control the positions of balls 30, and thus the orientation of the homokinetic plane.

The position of member 40 relative to member 12 is thus determined by individual and selective operation of control assemblies 16. Obviously, control assemblies 16 may be programmed for coordinated control of related movements of balls 30. Universal angular movement of member 40 may be effected, and thus the angular position of member 40 relative to member 12 may be precisely controlled.

Similarly, the axial position of member 40 on axis C may be precisely controlled within limits, irrespective of the angle between axes A and C.

With reference to FIGURE 3, an alternative ·to the lead screw mechanism of control assembly 16 is disclosed in the form of a modified control assembly 16a. Shaft 22a reciprocates within pin 18. Nut 26 is rigidly secured to one end of shaft 22a for axial movement relative to pin 18. An actuator 34a, which may be a double-acting pneumatic cylinder or the like, is provided to reciprocate shaft 22a. Control assemblies 16a are thus individually operated, as are assemblies 16.

A modified controllable joint 10a is shown in FIGURE 4. In this modification, drum 14a supports a thrust ring 46 having an inner surface 46a of partial spherical configuration. Member 40 supports a thrust washer 48 which bears against the inner ends of control assemblies 16. Flange 42a has an outer surface 42b of partial spherical configuration which is compatible with surface 46a of ring 46. Member 40 is free for universal angular movement relative to member 12, but is restrained from axial movement along axis C in one direction by ring 46 and in the opposite direction by washer 48. The modified joint 10a may be preferred where precise axial positioning is not required, or where a high load-bearing capacity is required.

Member 40 can be rendered freely movable by turning off the power to stepper motors 34 (FIGURE 1), or by venting both sides of cylinders 34a (FIGURE 3). In this event joint 10 or 10a would act in the manner of the universal joints disclosed in the aforementioned patents. This feature may be useful for installation, adjustment, maintenance, etc. It also may be useful where, after member 40 has been positioned, there is a requirement for the transfer of torque from member 12 to member 40.

Although two assemblies for controlling balls 30 are disclosed, it should be apparent to those skilled in the art that alternative assemblies are available.

Member 12 has been described herein as the drive member and member 40 as the driven member. Obviously this relationship could be reversed if desired.

The controllable joint disclosed herein is simple and occupies a small space. It may be precisely controlled by a suitable computer program or the like.

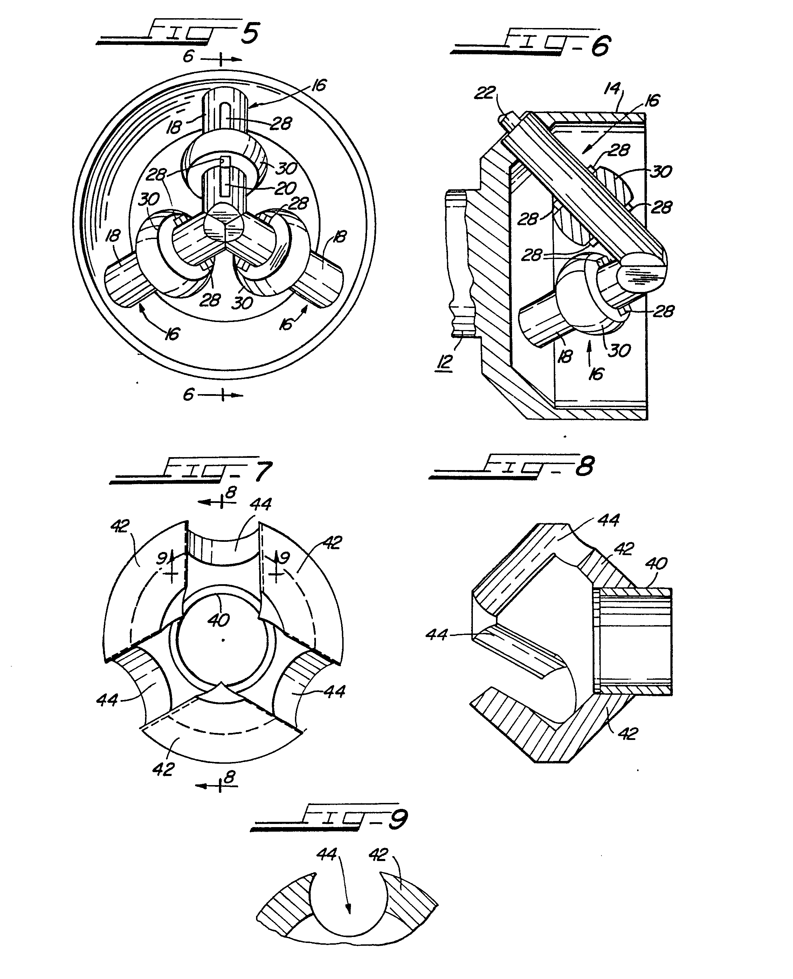

FIGURES 5-9 are includes so that, with the teachings of the patents cited above, those skilled in the art will be enabled to practice the invention with a minimum of experimentation.

## CLAIMS

1.  A controllable joint (10) comprising first (12) and second (40) members having first (A) and second (C) axes respectively, said first member supporting at least three pins (18) inclined relative to said first axis, at least three coupling members (30), each of said coupling members being movable along an associated pin, said coupling members defining the homokinetic plane bisecting the angle between said first and second axes, said second member (40) defining at least three grooves (44) inclined relative to said second axis, each of said coupling members (30) being received in an associated groove (44), and means (16) for selectively controlling movement of each of said coupling members (30) to thereby effect controlled movement of said second member and thus determine the position of said second member relative to said first member.

2.  The controllable joint of claim 1, said first member supporting at least three control assemblies (16), each of said control assemblies including an associated pin (18), said control assemblies being said means for selectively controlling movement of each of said coupling members.

3.  The controllable joint of claim 1 or 2, said first member (12) including a drum (14) supporting said pins (18), said pins supporting said coupling members (30), and said second member (40) including a flange (42) defining said grooves (44).

4.  The controllable joint of claim 2, each of said pins having a third axis (B), said third axes converging on said first axis (A).

5. The controllable joint of claim 2, each of said grooves (44) having a fourth axis (D), said fourth axis converging on said second axis (C).

6. The controllable joint of claim 4, each of said grooves (44) having a fourth axis (D), said fourth axis converging on said second axis (C).

7. The controllable joint of claim 6, the angles between said first (A) and third (B) axes being equal to the angles between said second and fourth axis (D).

8. The controllable joint of claim 6, each of said coupling members (30) being a ball slidable along an associated third axis (B), said ball having a substantially spherical surface, and each of said grooves (44) having a surface substantially cylindrical about an associated fourth axis (D).

9. The controllable joint of claim 8, each of said control assemblies including a lead screw mechanism (16) for sliding an associated ball (30).

10. The controllable joint of claim 9, each of said control assemblies including a motor (34) for driving an associated lead screw mechanism (16).

11. The controllable joint of claim 10, each of said motors being a stepper motor (34).

12.  The controllable joint of claim 8, each of said control assemblies including a shaft (22a) slidable along an associated third axis (B) for sliding an associated ball (30).

13.  The controllable joint of claim 12, each of said control assemblies including a motor (34a) for sliding an associated shaft.

14.  The controllable joint of claim 13, each of said motors being a double-acting cylinder (34a).

15.  The controllable joint of claim 1, 2, 4, 5, 6, 7, 8, 9, 10, 11, 12, 13 or 14, further comprising means (48) for restraining axial movement of said second member along said second axis (C).

16.  A controllable joint comprising:

a first member (12), including a drum portion (14) and a shaft portion (13) extending from the drum portion along a first axis (A), three pins (18) supported by and extending from the drum portion, each of said pins extending at the same angle with respect to said first axis, and three ball units (30), one of which is positioned on each of said pins for movement toward and away from said first axis;

a second member (40), having a flange portion (42) and a shaft (41) portion extending from the flange portion along a second axis (C), said flange portion defining three grooves (44), each groove having an axis (D) which converges inwardly and intersects the other groove axes at a point on said second axis (C), each ball unit (30,32) of the first member being received in one groove (44) of the second member, which ball units define the homokinetic plane bisecting the angle defined by said first (A) and second (C) axes; and

means (16), associated with said first member, for effecting selective, individual movement of at least three of said ball units (30,32), and thus effecting a controlled reaction movement of said second member (40) to regulate the angular position of said second member shaft portion (41) relative to said first member shaft portion (13).

17.   A controllable joint as defined in claim 16, in which at least three of the combinations of pin-and-ball units in said first member are constructed as a lead screw mechanism (16), such that rotation of a given mechanism effects a related displacement of its associated ball unit along its associated pin.

18.   A controllable joint as claimed in claim 17, and further comprising at least three drive motors (34), respectively coupled to the individual mechanisms, so that each drive motor when energized rotates its associated mechanism to displace the ball unit positioned on its associated pin.

19.   A controllable joint comprising first (12) and second (40) members having first (A) and second (C) axes respectively, said first member supporting at least three coupling members (30), each of said coupling members being movable relative to said first axis (A), each of said coupling members being received by said second member (40) such that their movement relative to said first axis (A) also causes them to move relative to said second axis, whereby said coupling members define the homokinetic plane bisecting the angle between said first (A) and second (C) axes, and means (16) for selectively controlling movement of each of said coupling members to thereby determine the position of said second member relative to said first member.

20. A controllable joint comprising first (12) and second (40) members having first (A) and second (C) axes respectively, said first member supporting at least three coupling members (30) for movement relative to said first axis (A), said coupling members being received by said second member (40) such that their movement relative to said first axis (A) causes movement of said second member (40) relative to said first axis (A), whereby said coupling members define the homokinetic plane bisecting the angle between said first (A) and second (C) axes, and means for selectively (16) controlling movement of said coupling members to thereby determine the position of said second member relative to said first member.

21. The controllable joint of claim 20, said movement controlling means (16) selectively controlling movement of said coupling members to thereby determine the angular position of said second (40) member relative to said first (12) member.

22.    The controllable joint of claim 20, said movement controlling means (16) selectively controlling movement of said coupling members to thereby determine the axial position of said second member relative to said first member.

23.    The controllable joint of claim 21, said movement controlling means (16) selectively controlling movement of said coupling members to thereby determine the axial position of said second member relative to said first member.

FIG-1

FIG-3

FIG-2

FIG-4

FIG-5

FIG-6

FIG-7

FIG-8

FIG-9